(19) Europäisches Patentamt / European Patent Office / Office européen des brevets

(11) **EP 4 456 483 A1**

(12) **EUROPEAN PATENT APPLICATION**

(43) Date of publication:
**30.10.2024 Bulletin 2024/44**

(51) International Patent Classification (IPC):
***H04L 9/40*** *(2022.01)* ***G06F 21/55*** *(2013.01)*

(21) Application number: **24170789.2**

(52) Cooperative Patent Classification (CPC):
**H04L 63/1425;** G06F 21/552

(22) Date of filing: **17.04.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 IL 30222223**

(71) Applicant: **Deutsche Telekom AG 53113 Bonn (DE)**

(72) Inventors:
- **LAVI, Danielle 7925500 Gan Hadarom (IL)**
- **ELYASHAR, Aviad 8474915 Beer Sheva (IL)**
- **MIMRAN, David 6215505 Tel Aviv (IL)**
- **ELOVICI, Yuval 7986400 Arugot (IL)**
- **SHABTAI, Asaf 7684200 Hulda (IL)**
- **BRODT, Oleg 8471621 Beer Sheva (IL)**
- **LEHMANN, Heiko 12587 Berlin (DE)**

(74) Representative: **Vossius & Partner Patentanwälte Rechtsanwälte mbB Siebertstrasse 3 81675 München (DE)**

(54) **DETECTION OF COMPROMISED FUNCTIONS IN A SERVERLESS CLOUD ENVIRONMENT**

(57)    A method for detecting compromised functions and threats in a serverless cloud environment, according to which an unsupervised deep learning anomaly detection model utilizes only cloud provider's native monitoring tools to detect abnormal behavior of serverless applications, while customizing the data preprocessing for the analysis of serverless application logs, thereby considering all of the unique features of said application logs. The model is used to detect a predefined type of threat with unique patterns and post-exploitation abnormal behavior.

Fig. 1

EP 4 456 483 A1

**Description**

**Field of the Invention**

The present invention relates to the field of cyber-security. More particularly, the invention relates to a method for detecting compromised functions, in a serverless cloud environment.

**Background of the Invention**

Serverless computing is an emerging cloud computing paradigm using serverless functions. Serverless computing enables organizations to build and deploy software and services without the need to maintain, provide, or scale resources, such as physical or virtual servers [21]. Serverless environments allow software developers to develop applications without the need to actively manage the underlying runtime infrastructure. However, these environments may be exposed to a wide variety of security threats that can be challenging to mitigate.

Serverless computing in the cloud offers mainly backend-as-a-service (BaaS) and function-as-a-service (FaaS) [23] cloud usage models, of which FaaS is the primary serverless model [12]. Serverless functions (e.g., AWS Lambda, Azure functions) are small, stateless, single purpose units of business logic within a serverless application that are designed to be triggered by predefined events.

The shift from on-premises to cloud computing and serverless computing has presented cybersecurity defenders with a wider attack surface [1] and a growing number of challenges [35] as specified below.

In serverless computing, organizations are generally confined to the underlying infrastructure settings to suit their security needs. Therefore, security teams cannot add lower-level defense schemes or monitoring capabilities, and they must rely on the existing measures and logging provided by the cloud platform provider. Accordingly, their ability to assess their system's threats and determine the organization's defense posture is limited [14,18].

In an agile application development setting, many code changes are made, and new resources are often created, making the application more dynamic, which in turn makes application monitoring much more challenging. As serverless application code changes frequently, maintaining a consistent security posture is challenging, due to a constantly shifting attack surface and changes in logging data, application configurations, and permissions.

Serverless applications have inherited the typical security problems associated with cloud computing (e.g., configuration mismanagement, identity management, data leakage), resulting in a larger attack surface [22,26]. In most cases, serverless functions perform a single atomic task and are able to run in parallel with other functions. Therefore, many of serverless functions may use the same resources at the same time and need to communicate with each other and with additional services, which creates a complex and wide attack surface (an organization's attack surface is the sum of vulnerabilities, pathways, or methods that hackers can use to gain unauthorized access to the network or sensitive data, or to carry out a cyberattack). In addition, serverless functions may be invoked by a plethora of internal and external events, thereby providing an attacker with a variety of avenues to try and exploit.

Existing solutions rely on rule-based methods, required the cooperation of third-party services, or demanded modifications that could not be made in a fully managed environment (where the service provider handles the setup, administration, management, and support of the physical server and application environment). Most of the proposed methods performed static or dynamic analysis of applications in order to detect anomalies in their information flow and enforce access control. For example, static analysis solutions can be used to audit and detect "bad practices" concerning serverless security [24,30], however this approach does not detect external threats (e.g., injections) or scale well in fast-moving, dynamic environments. Furthermore, static analysis may be unable to differentiate between malicious and legitimate code, since such methods may consider the malicious code to be innocuous.

Dynamic analysis techniques used *modified* versions of the functions' runtime environment to monitor and detect malicious activity [4,5,16,27]. However, these methods do not address the need for threat detection solutions in *a fully managed serverless environment.* Their ability to control and modify the existing infrastructure is only possible when operating in a *non-managed environment,* which is unrealistic in the major cloud providers' settings. Furthermore, many of these solutions [4,15,16,27] aim at preventing injection attacks or the introduction of malicious code via the supply chain by blocking suspicious requests rather than identifying malicious behavior and take the "presumption of compromise" approach. In addition to the fact that prevention is usually prone to failure, this approach could also lead to a high false alarm rate, which would interfere with the application's availability.

In spite of the many security challenges posed by serverless computing, it also offers a new threat detection opportunity, since atomic units of serverless functions enable native function-level logging with high granularity. Among other things, high-resolution logging enables both application administrators to gain a deeper understanding of serverless applications and security teams to identify anomalies and potential threats. There are a number of challenges in developing a threat detection model for serverless functions, including challenges stemming from their dynamic nature, high volume, and the wide variety of activities that take place during their lifetimes. These create a lot of noise in the system and enable attackers to "stay below the radar".

Serverless functions, which are the main component of serverless environments, provide attackers with new opportunities to exploit their permissions and accomplish their goals [3,18,22,26]. These functions often consist of different components and services, thereby creating many potential entry points for attackers (e.g., the function's code or dependencies and the underlying infrastructure). Serverless functions are event-driven and can be invoked in response to a wide variety of events (e.g., HTTP requests, database updates, storage modifications), which increases their attack surface. Serverless functions are also stateless and short-lived. As a result, it is complicated to determine their role within the application flow and the context in which they run.

In addition to the security complexity associated with the intrinsic nature of serverless functions, misconfiguration errors may also play a significant role. A misconfigured function (e.g. over-privileged, having an excessively long timeout) may result in vulnerabilities that allow an attacker to exploit the function. A compromised serverless function is defined as a function that acts in an unintended way, resulting from the action of a malicious actor.

*Attacks on Integrity - Permission Misuse*

Permission misuse, which is a deliberate and malicious attack pattern, occurs when a user's (either a human user or a system resource) permission is used inappropriately. In many cases, misusing permissions is possible due to excessive privileges being granted to resources and functions in violation of the "least privilege" principle [9,22]. These over-privileged functions allow attackers to manipulate execution flows to gain advantages. For example, when permissions are granted too broadly, a function may be able to access resources or perform actions it should not be allowed to perform [26]. In turn, this can create security vulnerabilities, expose sensitive data, and/or harm the application's performance.

*Attacks on Confidentiality - Data Leakage*

Data leakage is the exposure of sensitive data outside an organization. Data sources are an integral component of serverless applications, and the event-driven nature of the serverless paradigm encourages transfer of data between serverless functions. This, along with misconfigured resources, can lead to the leakage of confidential data. For example, one of the most common data leakage scenarios in AWS-based environments occurs when an *Amazon Simple Storage Service (53)* "bucket" is misconfigured, and its permissions are set as public, thereby allowing public access to internal private data [8,28]. Therefore, writing sensitive and confidential information to a public access bucket by a compromised serverless function should be adressed.

*Attacks on Availability - Denial-of-Wallet*

A denial-of-wallet (DoW) attack targets cloud applications in general and serverless applications in particular. Similar to a typical DoS attack, a DoW attack attempts to exhaust a specific resource, which in this case, is the budget allocated by the cloud administrator for computational resources. Accordingly, the attacker seeks to over-utilize cloud-based resources, which results in higher cloud usage bills, exceeds the allotted budget, or even pushes the application owner into bankruptcy [26]. DoW attacks take advantage of the scalability of serverless applications to artificially increase cloud resource consumption, which may eventually inflate the application's cost and exhaust its budget [17]. DoW attacks have become a significant threat to serverless applications, requiring consideration, detection, and mitigation.

Several approaches for serverless security have been explored for threat detection in serverless environments. Obetz et al. [24] proposed a static analysis technique for extended call graphs that considers the relationships among functions and other backend services. The information that can be obtained through static analysis is, however, limited and covers very few of the possible threats.

Dynamic analysis techniques were suggested to better understand the activity behind the scenes when an application is running. Some focused on an application's data flow [2,4], while others focused on an application's control flow [15,16,27]. Alpernas et al. [2] introduced Trapeze, a dynamic information flow control for JavaScript serverless applications. Their solution, however, requires modifying all services being used by the application, and it makes assumptions about the serverless functions' programming language. Datta et al. [4] presented Valve, a platform for dynamic information flow control that uses network-level tainting to monitor functions' activity and detect attacks. Valve and Trapeze both rely on the collaboration of third-party services to track and monitor the functions' activity, which is not feasible with all serverless architectures.

SecLambda, an architecture for securing serverless applications, was introduced by Jegan et al. [15]. Their solution provides an extension that monitors and blocks requests within each serverless runtime environment, in addition to a control program that monitors the system. Sankaran et al. [27] proposed WILL.IAM, an access control flow model for serverless applications, which creates workflowbased policies to enforce. However, these solutions focus on signatures of previously observed legitimate flows and specific patterns of serverless applications, without aiming to obtain any knowledge of more sophisticated patterns.

Datta et al. [5] presented ALASTOR, a framework that collects the system and application layers' information regarding functions' activity. A global data provenance graph is then created based on the information gathered. Kalium, an extensible security framework to enforce control-flow integrity for serverless functions and serverless applications, was proposed by Jegan et al. [16].

Many of the previously proposed solutions [4,5,16,27] were implemented in a non-managed serverless environment, thus not meeting the need for threat detection solutions in a managed serverless environment. In a non-managed serverless architecture, the organization is responsible for infrastructure management. This gives the organization greater control of the infrastructure and allows it to modify the infrastructure based on its needs.

Logging and monitoring systems' activities are essential for determining a system's state and performance and obtaining an overall picture of the system. The ability to debug and perform root cause analysis and anomaly detection relies on the existence of system logs (a log is a timestamped record of an event generated by an operating system, application, server, or network device. Logs can include data about user inputs, system processes, and hardware states). As the log volume increases, it becomes impossible to use conventional anomaly detection methods based primarily on manual inspection. To address this issue, extensive research has been performed in the areas of automated log analysis and anomaly detection. Prior methods used traditional machine learning methods for anomaly detection, such as SVM [7] and clustering [20], as well as deep learning methods, such as LSTM [6,32,33], autoencoders [34], transformers [10], and graph embedding [19]. Other studies modeled logs generically [6,31] or modeled specific activities like network traffic [13], user activity [29], or other domains [11].

Deep learning methods have been shown to perform better than conventional anomaly detection methods when it comes to learning feature representations and detecting anomalies based on them in real-world applications [25].

It is, therefore, an object of the present invention to provide a method for detecting compromised functions in a serverless cloud environment, for preventing permission misuse by exploiting misconfiguration of cloud entities to misuse their permissions.

It is another object of the present invention to provide a method for detecting compromised functions in a serverless cloud environment, for preventing data leakage exposing sensitive data via publicly available data resources.

It is further object of the present invention to provide a method for detecting compromised functions among a large number of functions running simultaneously and operating on the same resources.

It is another object of the present invention to provide a method for detecting compromised functions in a managed serverless environment, using only the monitoring and logging tools provided by the cloud provider, without the need to modify the existing infrastructure.

Other objects and advantages of the invention will become apparent as the description proceeds.

## Summary of the Invention

A method for detecting compromised functions (software functions that have been infiltrated by unauthorized individuals or malicious software, allowing them to gain control or access sensitive information) and threats (such as permission misuse, data leakage and compromised functions) in a serverless cloud environment, according to which an unsupervised deep learning anomaly detection model is provided. The model utilizes only cloud provider's native monitoring tools to detect abnormal behavior of serverless applications, while customizing the data preprocessing for the analysis of serverless application logs, thereby considering all of the unique features of the application logs. The model is used to detect a predefined type of threat having unique patterns and behavior.

Log files from various sources that contain different details with different granularity levels about a specific request may be combined.

In one aspect, one or more LSTM autoencoders are used to model the normal behavior of each serverless function.

Native hyper-logging capabilities provided by the serverless platform may be used.

The model may utilize fine-grained logging to detect both known and unknown threats. The unique features extracted by the threat detection model may be used to enrich the basic information provided by the activity logs, to thereby add information regarding the environment.

The model may use graph theory features to learn the interactions between services and to detect anomalies in the interactions.

The model may be a Compromised Function Detection model (CFD) that is adapted to:

a) generate multivariate sequences using high-resolution logging of the serverless functions;
b) represent each serverless function instance as a flow of the function's internal operations;
c) detect anomalies within the function flow or within individual events in the function by analyzing the sequences.

A unique anomaly detection dataset may be provided, which contains data reflecting the activity of two distinct applications, each corresponding to a different serverless paradigm.

Dynamic analysis may be performed, which consists of testing and evaluating an application during runtime.

An application flow may be triggered by an action outside of the cloud environment.

In one aspect, a detection pipeline may be used, which consists of the following steps:

a) data collection for the anomaly detection models using the cloud provider's logging and monitoring tools;
b) data filtering and preprocessing, where each threat detection model filters and processes the raw log files to produce the appropriate data representation used by the model.

The Data Leakage Detection model may be adapted to:

a) generate graph representations of the cloud environment;
b) generate features for each node in the graph;
c) train a deep autoencoder to reconstruct each node's features;
d) predict the anomaly score of each node based on the autoencoder's reconstruction error.

The Compromised Function Detection model may be adapted to:

a) generate graph representations of the cloud environment;
b) detect deviations from the normal activity of serverless functions;
c) represent the sequence of events occurring during the execution of each function by a sequence of vectors, where each vector represents an event in the sequence.

The compromised function detection model may be adapted to detect deviations from the normal activity of serverless functions flow.

The events that occur during the execution of each function may be represented by a sequence of vectors, where each vector represents an event in the sequence.

The raw logs containing information regarding the activity of the serverless applications may be collected and used to train the threat detection model.

A serverless cloud environment having detection capability of compromised functions and threats, comprising:

a) at least one processor and associated memory, for running an unsupervised deep learning anomaly detection model, being capable of:
b) utilizing only cloud provider's native monitoring tools to detect abnormal behavior of serverless applications, while customizing the data preprocessing for the analysis of serverless application logs, thereby considering all of the unique features of said application logs;
c) detecting a predefined type of threat having unique patterns and post-exploitation abnormal behavior.

The serverless cloud environment may further comprise a unique anomaly detection dataset containing data reflecting the activity of two distinct applications, each corresponding to a different serverless paradigm.

Dynamic analysis consisting of testing and evaluating an application may be performed during runtime in the serverless cloud environment.

## Brief Description of the Drawings

The above and other characteristics and advantages of the invention will be better understood through the following illustrative and non-limitative detailed description of preferred embodiments thereof, with reference to the appended drawings, wherein:

- Fig. 1 shows an application flow of a booking process in the testbed; and
- Fig. 2 presents an example of an event vector associated with a PutItem operation in DynamoDB, before and after it was encoded and normalized.

## Detailed Description of the Invention

The present invention provides an extendable serverless security threat detection model that leverages cloud providers' native monitoring tools to detect anomalous behavior in serverless applications. The model detects post-exploitation abnormal behavior related to different types of threats on serverless functions, and is therefore, a last line of defense. The model may use graph theory features to learn the interactions between services and to detect anomalies in these interactions.

The present invention also provides serverless cloud environment with detection capability of compromised functions and threats. The serverless cloud environment comprise at least one processor and associated memory, for running an unsupervised deep learning anomaly detection model, which can utilize only cloud provider's native monitoring tools to detect abnormal behavior of serverless applications, while customizing the data preprocessing for the analysis of serverless application logs, thereby considering all of the unique features of said application logs and detect a predefined type of threat having unique patterns and post-exploitation abnormal behavior.

The present invention can identify a wide variety of anomalies using deep neural networks' ability to learn hidden behavioral patterns in applications' activities. By doing so, both known and unknown attacks are detected with no need for prior knowledge of their signatures. Moreover, existing solutions are mainly preventative and handle attacks in cloud-based environments by reducing the attack surface, while the method of the present invention provides the user with the ability to assess the detected anomalies' severity and determine the proper response to them, to gain a better security posture.

The detection model of the present invention utilizes data logs to detect anomalies, while customizing the data preprocessing for the analysis of serverless application logs (structured records of events and activities generated by software applications, which capture a wide range of information, including error messages, user interactions, system events, and application-specific data), in order to consider all of their unique features (e.g., combining log files from various sources that contain different details with different granularity levels (the level of detail at which data is collected and analyzed, which can influence the accuracy and efficiency of data analysis, machine learning, and artificial intelligence) about a specific request. Therefore, as much information as possible can be gathered).

An LSTM autoencoder (an implementation of an autoencoder for sequence data using an Encoder-Decoder LSTM architecture) is used to model the normal behavior of a collection of serverless functions. The Long Short-Term Memory (LSTM) is a recurrent neural network architecture widely used in Deep Learning that captures long-term dependencies, making it ideal for sequence prediction tasks.

The proposed method is threat-agnostic and designed to detect different types of threats, both known and unknown, across various threat categories. The method uses native hyper-logging capabilities provided by the serverless platform, and therefore it is self-contained and does not require any external information.

The Compromised Functions Detection model uses high-resolution logging of the serverless functions and generates multivariate sequences to represent each serverless function instance as a flow of the function's internal operations. By analyzing these sequences, the model can detect anomalies within the functions' flows themselves, as well as within individual events in these flows. Since the model can recognize hidden patterns in the behavior of each function, it presents a generic approach, rather than targeting specific threats.

The proposed models have been evaluated using a serverless evaluation testbed in an AWS environment that contains two open-source serverless applications. As part of the testbed, benign user activity was simulated as well as a variety of attacks. The model successfully detected all of the implemented attacks while maintaining a low false alarm rate (0.003). Such capabilities are crucial for improving the security of today's widely used serverless platforms and the performance of the security teams, responsible for defending them.

The present invention provides a novel threat detection model for serverless functions. The proposed model is built on top of cloud providers' *native* hyper-logging and monitoring tools, and security teams can use it without the need for any external collaboration (e.g., asking a developer to change the source code or enlisting the cooperation of third-party services). A unique anomaly detection dataset has been collected for the serverless security field, which contains data reflecting the activity of two distinct applications, each of which was developed in a different serverless paradigm and has its own unique characteristics.

The Threat Model

The present invention considers the following elements of serverless computing:

- *Serverless functions* - Event-driven computing services that allow code to be run without provisioning or managing servers and automatically manage the computing resources required by that code.

- *Data resources* - Cloud services that are responsible for data storage.

- *Trigger events* - Group of services that trigger and orchestrate the activation of serverless functions by leveraging the serverless applications' event-driven nature (e.g., AWS *EventBridge, API Gateway,* and *Step Function*).

- *Monitoring tools* - Services that audit and monitor the activities of the different entities in the cloud environment. These tools can monitor both interactions between different cloud entities and the inner flow of serverless functions.

Evaluation has been performed using applications deployed in the AWS cloud environment. *AWS Lambda* has been used to implement the serverless functions, *AWS Simple Storage Service (53)* as a data storage service, and AWS *DynamoDB* as a database service.

The following three trigger events were used: (1) *EventBridge* - A serverless bus event used to trigger event-driven functions (e.g., trigger Lambda functions on timed events). (2) *API Gateway* - A service that enables the maintenance of RESTful APIs. In the evaluation testbed, the application receives API requests from users, and the API Gateway service triggers Lambda functions in response. (3) *Step Function* - A workflow service used to orchestrate microservices, build pipelines (sets of data processing elements connected in series, where the output of one element is the input of the next one) using AWS services, and combine multiple Lambda functions in responsive serverless applications and microservices. The Step Function service allows to orchestrate complete application workflows. The following monitoring and application logging tools have been used in the AWS evaluation:

- CloudTrail[1] - This service provides logs for every API call in the cloud environment. These API calls may be a database operation, an invocation of a serverless function, or any other use of an AWS service by the function.

- CloudWatch[2]- This tool collects the logs provided by CloudTrail.

- X-Ray[3] - This debugging tool collects detailed information about application flows' activities, tracks the relationships among different components, and builds an execution graph for each session.

The logs used by the proposed threat detection model contain *application flows.* An *application flow* is usually triggered by an action outside of the cloud environment (e.g., a REST API call or a file upload to a public storage service). Each *application flow* is constructed by sequences of *function flows,* where each *function flow* consists of a sequence of *function events* such as internal functions' calls or resource operations.

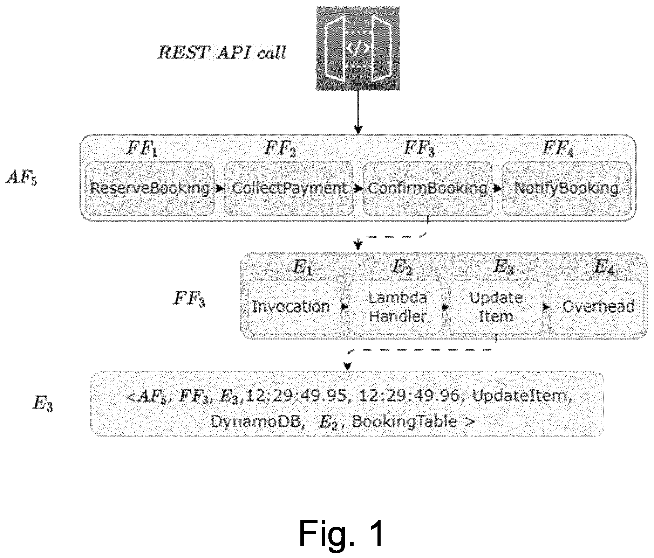

Fig. 1A is an example of an *application flow* ($AF_5$) in the testbed. As can be seen in the booking application flow example, the *application flow* is triggered by a REST API call and is composed of four *function flows.* In this example, the third *function flow* is of a function named ConfirmBooking (denoted by $FF_3$), which contains a sequence of four *function events.*

Each *function event* is defined by the following properties:

- *ApplicationFlowId* is the identifier of the *application flow of* the event that occurred.

- *FunctionFlowId* is the identifier of the *functition calon flow* the event occurred .

- *EventId* is the identifier of the event.

- *StartTime* is the event's start time.

- *EndTime* is the event's end time.

- *EventName* is the name of the operation that took place (e.g., initialization, invocation, overhead, a resource operation (GetItem, PutItem, etc.), or the name of an internal function that was called).

- *EventType* is the type of the event (e.g., an internal function call, the event's serverless service name (DynamoDB, S3, SNS, etc.), or other).

- *EventParentName* is the name of the event's predecessor. In some cases, an event may be triggered by another event. In such cases, the log provides information about the calling event.

- *EventTarget* is the event operation's target resource.

The proposed Compromised Function Detection (CFD) model focuses on serverless functions' flow and detects deviations from their normal activity. The events that occur during the execution of each function are represented by a sequence of vectors, where each vector represents an event in the sequence. This way, the high granularity of the cloud provider's logs can be used to model and detect abnormalities in the order of the events in a function's execution as well as in the events' attributes. This is done by using an LSTM autoencoder, which learns the complex patterns in the temporal order of the monitored serverless function' sequences and the characteristics of each event in these sequences, and identifies anomalous sequences based on what it learned.

Data is collected by using the cloud provider's native monitoring tools, such as hyper-logging and monitoring tools. All major cloud providers possess such tools in their platforms[4] (i.e., AWS, Microsoft Azure, Google Cloud). The raw logs containing information regarding the activity of the serverless applications are collected and used to train the proposed threat detection model under the assumption that (1) the attacker is unable to control logging and (2) the logs are unmodified and reflect the real activity of the system (i.e., functions).

The collected data consists of *applicationflows* representing the activities of the applications in the serverless environment. The *functionflows* of the monitored functions are used from these *applicationflows*. In the preprocessing stage, in order to represent each function execution, a sequence of n vectors has been created. Each vector represents an event that occurred as part of the *functionflow*. The relevant features of each event are extracted from the log entry associated with the event, and new features are generated based on these features.

The features extracted directly from the event's log entry include: *EventName, EventType, EventParentName, EventTarget.*

The new features generated based on the event's log entry include the *EventDuration* - the difference between the event's *StartTime* and *EndTime; RelativeStartTime* - the time that passed since the *StartTime* of the first event in the sequence; and the depth of the event (the depth is one if the event has no *EventParentName,* and otherwise the depth is the depth of the parent event plus one).

These features are used to construct the event vectors, which are then encoded and normalized. For each categorical feature's set of values, an additional value is added to represent "out of vocabulary" values (i.e., values that were not seen for this feature in the training set). Then, the categorical features are encoded, based on the number of values that each feature has in the training set. The values of the numerical attributes are normalized to a value between zero and one, using min-max normalization, based on each attribute's values across the data of each function.

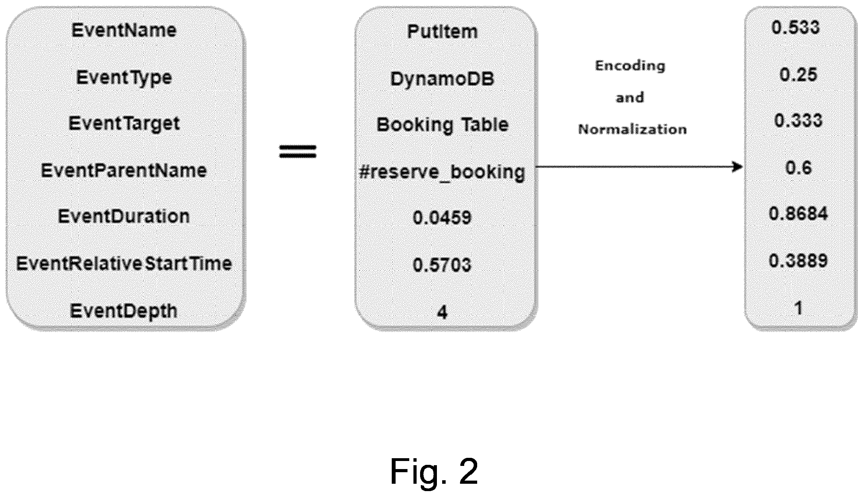

Fig. 2 presents an example of an event vector associated with a *PutItem* operation in DynamoDB, before and after it was encoded and normalized.

*Anomaly Detection*

In order to learn the normal behavior patterns of the serverless functions, a dedicated LSTM autoencoder is trained for each monitored function. Since different attacks may be captured within different-sized time frames, for each monitored function, several autoencoders are trained, such that each autoencoder is trained on a different sequence size (i.e., window size).

Using the sequences generated in the preprocessing stage as an input to the LSTM autoencoders (an autoencoder is an unsupervised Artificial Neural Network that attempts to encode the data by compressing it into the lower dimensions and then decoding the data to reconstruct the original input), each autoencoder learns the typical patterns of its function's sequences. The LSTM autoencoder encodes and decodes each function instance (that defines the use of the function in a particular context) represented by a sequence of vectors. Then, the reconstruction error (computed using the mean square error (MSE)) of each sequence is used to determine the anomaly score of the instance it represents. The sequences with an anomaly score that is greater than a predefined threshold, are flagged as possible attacks.

The threshold for each autoencoder is derived based on the following equation, which is based on the reconstruction errors of the instances in the validation set:

$$T = 4 * Min((99thpercentile + Max(diffPercentiles)), Max(errorsValidation))$$

where $errors_{Validation}$ is the validation set's reconstruction errors, $99^{th}_{percentile}$ is the $99^{th}$ percentile of the reconstruction errors in the validation set, and $diff_{Percentiles}$ is a list of the differences between each pair of percentiles of the reconstruction errors of the validation set in 5% gaps.

Serverless Cyber Security Evaluation Testbed

To analyze and evaluate the model's performance, an experimental serverless cloud environment (serverless computing is an application development and execution model that enables developers to build and run application code without provisioning or managing servers or backend infrastructure) was constructed. A serverless cyber security evaluation testbed has been established (on the AWS platform), which is capable of: (1) covering several serverless development paradigms that utilize many types of serverless cloud resources, (2) generating a large amount of logging data of real-life activities, and (3) simulating the effects of common attack scenarios. The AWS X-Ray service, which is generally used as a debugging tool for AWS services in both development and production environments, has been utilized as a native fine-grained logging tool (that enables fine-grained control over logging on a per-part basis of a program). To reduce the overhead on the application runtime, AWS X-Ray can be configured to monitor specific and more critical serverless functions.

The testbed includes two applications that represent two different serverless development approaches and allows to examine a variety of AWS's serverless services in the testbed: (1) an airline booking application,[5] and (2) a video-on-demand (VOD) application. In the airline booking application, each serverless function has a single specific use within the workflow, while the functions in the VOD application are more generic and can be used multiple times in different contexts.

The Airline booking application contains multiple REST API endpoints that allow users to interact with it. It contains a variety of AWS services: four DynamoDB tables, four S3 buckets, SQS and SNS services (queue and notification services), the AppSync API service, and 12 Lambda functions. Some of the Lambda functions are orchestrated using the AWS Step Function service. There are three main types of business processes in the application: The first type is an API request that fetches information from a DynamoDB table and returns the data to the user (i.e., loyalty points and the flight catalog). This type of event is short-timed and contains a single access to a data source in the system. The second type of process is the booking process. In this process, an API request to book a flight triggers a series of data access operations and Lambda function invocations that transfer information between them.

This series of events is orchestrated by a step function. The third type of process is an event triggered by AWS EventBridge using time-based triggers.

The VOD application decodes videos into a streaming format and stores them in a public S3 bucket as part of its activity. The application contains three S3 buckets, two DynamoDB tables, and 17 Lambda functions. The VOD application contains four step functions that are responsible for the four main business processes of the application (in contrast to the airline booking application where only one of the business processes is orchestrated by a step function). Three of the processes are part of the main process that converts the format of the video files: (1) ingest - checks the file's validity, (2) process converts the file from a video file coding format to a different type of coding format using the AWS Elemental MediaConvert service, and (3) publish - creates a link to the file's location in the cloud and sends it by email to a predefined email address using the AWS Message Queuing Service (SQS). The fourth process is a mailing process that uses the AWS Simple Mailing Service (SES) to support video uploads through emails.

There are two ways to interact with the application: upload the files manually to the source S3 bucket or send mail to a predefined mail endpoint. Once the file is added to the source S3 bucket, the rest of the process is done automatically via EventBridge triggers and step functions.

Each application uses an individual DynamoDB table that contains the necessary configuration information for the simulation (for example, the probabilities for each implemented attack).

For the purpose of data simulation, data for the experiments was generated by simulating the real-life behavior of the applications in the testbed. To simulate the actions of real users, Python scripts were developed to activate functions in different logical orders and simulate errors that might occur during their execution.

In the Airline booking application, traffic through the website that serves as the front end of the airline booking application was simulated using fixed probabilities for different types of booking reservations (e.g., one-way or two-way flights). Once the booking reservation has been completed in the simulator, the step function in the cloud environment is being triggered and starts its workflow. There are error-handling mechanisms within that workflow that invoke different combinations of Lambda functions. To generate additional behavior patterns, some failure paths were added to the Lambda functions' executions which are part of the error-handling process. The probability for the execution of these paths is defined in the airline booking application's configuration table.

The total time of the simulation is dictated by the number of iterations that were set before the script is run. To simulate real-life activity on the application, intervals that create time gaps between users' activities with respect to the time of day and the users' actions were established, to create a distributed activity load that is more aligned with users' real behavior.

In the VOD application simulation, a staging S3 bucket that imitates a virtual "local drive" of a user that uploads video files to the application's source bucket has been created. The simulator uses the AWS SDK for Python (Boto3) in order to perform the cloud operations that trigger the application's workflow (upload files to S3 buckets). To trigger the mailing flow, the Amazon SES was configured to receive and store email from Amazon Route 53 service domain. In addition to the direct uploads via Boto3, the simulator also uses Python's email library to send emails to our domain. To simulate the realistic timing of file uploads, the Trending YouTube Video Statistics dataset from Kaggle has been used, which contains information about the upload times of popular videos in the US. The distribution of the uploads of these videos was used to simulate the activity in the VOD application.

Several attack scenarios were implemented in the testbed, to demonstrate the feasibility of the proposed method, which demonstrate common threats in the serverless threat landscape. These attack scenarios illustrate the effects that real attacks can have on a serverless application, including the artifacts they leave behind in serverless activity logs.

In the scenario of permission misuse (attack on integrity), an attack that modifies the serverless function's execution flow has been simulated. The abuse of permissions has been simulated by a serverless function that was granted permission to access and operate on a data source. In this case, the permissions are misused in order to change the context in which the function operates for the benefit of the attacker. In a first version of this scenario, the order of the data operations in the function's event sequence is different than usual (e.g., instead of updating an item and then obtaining an item from a table, the function performs a get item operation and then updates that item). In a second version of the attack, the function performs a different operation than the one it usually performs (e.g., updating an entry in a table instead of adding a new entry to it). A third version involves adding an additional action to the function's workflow (e.g., additional access to a DynamoDB table).

In the scenario of a data leakage attack (attack on confidentiality), the attacker uses the serverless function in order to leak sensitive information to a public access data source. In addition to the function's usual operation sequence, the attacker adds functionality that causes it to write data to an external AWS S3 bucket.

In the scenario of denial-of-wallet (attack on availability), two versions of this attack scenario were simulated. In the first version, the function repeats the same API call in order to access a data source multiple times as part of its execution. This increases both the amount of data transported and the function's runtime. The second version of the attack is designed to leave fewer tracks than the first one. In this version, the runtime of some of the functions is increased by just a few seconds (4-5). This might not raise suspicion if it is a one-time event, but if many functions run for extended periods, they will consume more resources and ultimately increase the cost to the user.

The abovementioned attacks are implemented in the main workflow of the examined applications. For each application, specific functions were selected and "infected" with the attack scenarios. During data collection, 10% of the instances of each "infected" function were configured to run the malicious code, and the anomalous instances were logged, in order to label each of the instances in the test set as benign or anomalous.

The execution time of the VOD application simulator is based on the number of files uploaded and processed. 3,000 files were uploaded over approximately six hours in each of the training and testing phases.

The execution time of the airline booking application is based on the number of iterations to be performed by the airline booking simulator. Each of the training and testing phases involved 800 iterations over approximately four hours.

The invocations in the test sets of both applications contain a predefined percentage of the implemented attacks, and each invocation was randomly selected to run the anomalous or the benign code based on it.

A total of seven (infected) functions have been examined - four in the VOD application and three in the airline booking application. The number of vector sequences for each examined function is presented in Table 1.

**Table 1**

| The number of function vector sequences in each dataset (application). | | | | | | | |
|---|---|---|---|---|---|---|---|
| Airline Booking Records (Instances) | | | | VOD Records (Instances) | | | |
| Train | Validation | Test | Anomalies | Train | Validation | Test | Anomalies |
| 5,927 | 1,481 | 4,497 | 484 | 14,568 | 3,642 | 16,374 | 1,577 |

A grid search has been conducted to choose the best hyperparameters for each LSTM autoencoder and for the model itself, i.e., the number of epochs, size of each input sequence (the sliding window size), and threshold for the instances' classification. Eventually, for each examined function three autoencoders were trained with three different sequence sizes: 3, 5, and 10. An instance (sequence) is classified as anomalous if at least one of the autoencoders classified it as such.

Experiments were made with the number of hidden layers and neurons in each layer, the activation functions within each layer, and the optimization algorithm for the network. The final selected network architecture is identical for all of the functions' autoencoders, and it consists of five fully connected feed-forward hidden layers. There are 128 and 64 neurons in each of the encoder and decoder layers (from the outer layer to the inner one), and the activation function for these layers is ReLU. A middle layer containing 64 neurons replicates the inner layer of the encoder by a factor equal to the number of events in the sequence. The Adam optimization algorithm was used for the network.

The threat detection results obtained for each application and attack are presented in Table 2. As can be seen, the precision, recall, and F1 score are relatively high, while the False Positive Rate (FPR) and False Negative Rate (FNR) are reasonably low for all of the attacks.

The precision scores obtained with the VOD application were lower than those of the airline booking application, due to the fact there was a higher number of false alarms for a specific function in the case of the VOD application. The *permission misuse (additional operation)* and *data leakage* attacks were implemented on this function. While there were very few cases where benign sequences were classified as anomalous. Analysis showed the vast majority of them involved cold-starting function instances. As such an event was relatively rare in the training set, the model was not sufficiently experienced with sequences that included it. Therefore, the more diverse the training set is in terms of the event sequences it contains, the more complete the model will be, and the better the results. The proposed model is able to highlight valuable log data for a manual inspection of the security analysts.

**Table 2**

| Detection results for each application and simulated attack. | | | | | | |
|---|---|---|---|---|---|---|
| Application | Attack | Precision | Recall | F1 Score | FPR | FNR |
| Airline Booking | Permission Misuse: Different Order of Operations | 0.973 | 1 | 0.986 | 0.003 | 0 |
| | Permission Misuse: Different Operation | 0.993 | 1 | 0.996 | 0.001 | 0 |
| | Data Leakage | 0.963 | 1 | 0.981 | 0.003 | 0 |
| | Denial-of-Wallet: Repeated Operation | 1 | 1 | 1 | 0 | 0 |
| | Denial-of-Wallet: Increased Function Duration | 0.976 | 1 | 0.988 | 0.002 | 0 |
| VOD | Permission Misuse: Different Order of Operations | 0.960 | 1 | 0.980 | 0.005 | 0 |
| | Permission Misuse: Additional Operation | 0.893 | 1 | 0.944 | 0.006 | 0 |
| | Data Leakage | 0.893 | 1 | 0.944 | 0.006 | 0 |
| | Denial-of-Wallet: Repeated Operation | 0.977 | 1 | 0.988 | 0.003 | 0 |
| | Denial-of-Wallet: Increased Function Duration | 0.969 | 1 | 0.984 | 0.004 | 0 |

As various embodiments and examples have been described and illustrated, it should be understood that variations will be apparent to one skilled in the art without departing from the principles herein. Accordingly, the invention is not to be limited to the specific embodiments described and illustrated in the drawings.

References

1. Owasp serverless top 10 (2021), https://owasp.org/ www-project-serverless-top-10/
2. Alpernas, K., Flanagan, C., Fouladi, S., Ryzhyk, L., Sagiv, M., Schmitz, T., Winstein, K.: Secure serverless computing using dynamic information flow control. arXiv preprint arXiv:1802.08984 (2018)
3. Chawla, R.: Information flow control for serverless systems. International Journal of Advanced Computer Science and Applications 12(9) (2021)
4. Datta, P., Kumar, P., Morris, T., Grace, M., Rahmati, A., Bates, A.: Valve: Securing function workflows on serverless computing platforms. In: Proceedings of The Web Conference 2020. pp. 939-950 (2020)
5. Datta, P., Polinsky, I., Inam, M.A., Bates, A., Enck, W.: {ALASTOR}: Reconstructing the provenance of serverless intrusions. In: 31st USENIX Security Symposium (USENIX Security 22). pp. 2443-2460 (2022)
6. Du, M., Li, F., Zheng, G., Srikumar, V.: Deeplog: Anomaly detection and diagnosis from system logs through deep learning. In: Proceedings of the 2017 ACM SIGSAC Conference on Computer and Communications Security. pp. 1285-1298 (2017)
7. Duessel, P., Luo, S., Flegel, U., Dietrich, S., Meier, M.: Tracing privilege misuse through behavioral anomaly detection in geometric spaces. In: 2020 13th International Conference on Systematic Approaches to Digital Forensic Engineering (SADFE). pp. 22-31. IEEE (2020)
8. Eddy, N.: Cloud misconfig exposes 3tb of sensitive airport data in amazon s3 bucket: 'lives at stake' (Jul 2022), https://www.darkreading.com/application-security/ cloud-misconfig-exposes-3tb-sensitive-airport-data-amazon-s3-bucket
9. Gill, P., Dietl, W., Tripunitara, M.V.: Least-privilege calls to amazon web services. IEEE Transactions on Dependable and Secure Computing (2022)

10. Guo, H., Yuan, S., Wu, X.: Logbert: Log anomaly detection via bert. In: 2021 International Joint Conference on Neural Networks (IJCNN). pp. 1-8. IEEE (2021)

11. Habler, E., Shabtai, A.: Using lstm encoder-decoder algorithm for detecting anomalous ads-b messages. Computers & Security 78, 155-173 (2018)

12. Hassan, H.B., Barakat, S.A., Sarhan, Q.I.: Survey on serverless computing. Journal of Cloud Computing 10(1), 1-29 (2021)

13. Hwang, R.H., Peng, M.C., Huang, C.W., Lin, P.C., Nguyen, V.L.: An unsupervised deep learning model for early network traffic anomaly detection. IEEE Access 8, 30387-30399 (2020)

14. Ibrahim, A.S., Hamlyn-Harris, J., Grundy, J.: Emerging security challenges of cloud virtual infrastructure. arXiv (2016). https://doi.org/10.48550/ARXIV.1612.09059, https://arxiv.org/abs/1612.09059

15. Jegan, D.S., Wang, L., Bhagat, S., Ristenpart, T., Swift, M.: Guarding serverless applications with seclambda. arXiv preprint arXiv:2011.05322 (2020)

16. Jegan, D.S., Wang, L., Bhagat, S., Swift, M.: Guarding serverless applications with kalium

17. Kelly, D., Glavin, F.G., Barrett, E.: Denial of wallet-defining a looming threat to serverless computing. Journal of Information Security and Applications 60, 102843 (2021)

18. Li, X., Leng, X., Chen, Y.: Securing serverless computing: Challenges, solutions, and opportunities. IEEE Network (2022)

19. Liu, F., Wen, Y., Zhang, D., Jiang, X., Xing, X., Meng, D.: Log2vec: A heterogeneous graph embedding based approach for detecting cyber threats within enterprise. In: Proceedings of the 2019 ACM SIGSAC Conference on Computer and Communications Security. pp. 1777-1794 (2019)

20. Liu, Z., Qin, T., Guan, X., Jiang, H., Wang, C.: An integrated method for anomaly detection from massive system logs. IEEE Access 6, 30602-30611 (2018)

21. Lynn, T., Rosati, P., Lejeune, A., Emeakaroha, V.: A preliminary review of enterprise serverless cloud computing (function-as-a-service) platforms. In: 2017 IEEE International Conference on Cloud Computing Technology and Science (CloudCom). pp. 162-169 (2017). https://doi.org/10.1109/CloudCom.2017.15

22. Marin, E., Perino, D., Di Pietro, R.: Serverless computing: a security perspective. Journal of Cloud Computing 11(1), 1-12 (2022)

23. Nupponen, J., Taibi, D.: Serverless: What it is, what to do and what not to do. In: 2020 IEEE International Conference on Software Architecture Companion (ICSAC). pp. 49-50 (2020). https://doi.org/10.1109/ICSA-C50368.2020.00016

24. Obetz, M., Patterson, S., Milanova, A.: Static call graph construction in {AWS} lambda serverless applications. In: 11th USENIX Workshop on Hot Topics in Cloud Computing (HotCloud 19) (2019)

25. Pang, G., Shen, C., Cao, L., Hengel, A.V.D.: Deep learning for anomaly detection: A review. ACM Computing Surveys (CSUR) 54(2), 1-38 (2021)

26. Pusuluri, V.S.R.: Taxonomy of security and privacy issues in serverless computing (2022)

27. Sankaran, A., Datta, P., Bates, A.: Workflow integration alleviates identity and access management in serverless computing. In: Annual Computer Security Applications Conference. pp. 496-509 (2020)

28. Seals, A., Seals, T.: Microsoft leaves 250m customer service records open to the web (Jan 2020), https://threatpost.com/microsoft-250m-customer-service-records-open/152086/

29. Sharma, B., Pokharel, P., Joshi, B.: User behavior analytics for anomaly detection using lstm autoencoder-insider threat detection. In: Proceedings of the 11th International Conference on Advances in Information Technology. pp. 1-9 (2020)

30. Skyscanner: Lambdaguard (2020), https://github.com/Skyscanner/ LambdaGuard

31. Tuor, A.R., Baerwolf, R., Knowles, N., Hutchinson, B., Nichols, N., Jasper, R.: Recurrent neural network language models for open vocabulary event-level cyber anomaly detection. In: Workshops at the thirty-second AAAI conference on artificial intelligence (2018)

32. Zhang, X., Xu, Y., Lin, et al.: Robust log-based anomaly detection on unstable log data. In: Proceedings of the 2019 27th ACM Joint Meeting on European Software Engineering Conference and Symposium on the Foundations of Software Engineering. pp. 807-817 (2019)

33. Zhao, Z., Xu, C., Li, B.: A lstm-based anomaly detection model for log analysis. Journal of Signal Processing Systems 93(7), 745-751 (2021)

34. Zhou, C., Paffenroth, R.C.: Anomaly detection with robust deep autoencoders. In: Proceedings of the 23rd ACM SIGKDD international conference on knowledge discovery and data mining. pp. 665-674 (2017)

35. Zissis, D., Lekkas, D.: Addressing cloud computing security issues. Future Generation computer systems 28(3), 583-592 (2012).

**Claims**

1. A method for detecting compromised functions and threats in a serverless cloud environment, comprising:

   a) providing an unsupervised deep learning anomaly detection model that utilizes only cloud provider's native monitoring tools to detect abnormal behavior of serverless applications, while customizing the data preprocessing for the analysis of serverless application logs, thereby considering all of the unique features of said application logs; and
   b) using said model to detect a predefined type of threat having unique patterns and post-exploitation abnormal behavior.

2. A serverless cloud environment having detection capability of compromised functions and threats, comprising:

   a) at least one processor and associated memory, for running an unsupervised deep learning anomaly detection model, being capable of:
   b) utilizing only cloud provider's native monitoring tools to detect abnormal behavior of serverless applications, while customizing the data preprocessing for the analysis of serverless application logs, thereby considering all of the unique features of said application logs; and
   c) detecting a predefined type of threat having unique patterns and post-exploitation abnormal behavior.

3. A method according to claim 1 or a serverless cloud environment according to claim 2, wherein log files from various sources that contain different details with different granularity levels about a specific request, are combined.

4. A method according to claim 1 or 3, or a serverless cloud environment according to claim 2, or 3, wherein LSTM autoencoders are used to model the normal behavior of each serverless function.

5. A method according to claim 1, 3, or 4, or a serverless cloud environment according to claim 2, 3, or 4, wherein native hyper-logging capabilities provided by the serverless platform, are used.

6. A method according to any one of claims 1 or 3 to 5, or a serverless cloud environment according to any one of claims 2 to 5, wherein the serverless threats are selected from the group of:

   - permission misuse;
   - data leakage;
   - compromised functions.

7. A method according to any one of claims 1 or 3 to 6, or a serverless cloud environment according to any one of claims 2 to 6, wherein the model utilizes fine-grained logging to detect both known and unknown threats.

8. A method according to any one of claims 1 or 3 to 7, or a serverless cloud environment according to any one of claims 2 to 7, wherein the unique features extracted by the threat detection model enrich the basic information provided by the activity logs, to thereby add information regarding the environment.

9. A method according to any one of claims 1 or 3 to 8, or a serverless cloud environment according to any one of claims 2 to 8, wherein the model uses graph theory features to learn the interactions between services and to detect anomalies in said interactions.

10. A method according to any one of claims 1 or 3 to 9, or a serverless cloud environment according to any one of claims 2 to 9, wherein the model is a Compromised Function Detection model (CFD) that is adapted to:

    a) generate multivariate sequences using high-resolution logging of the serverless functions;
    b) represent each serverless function instance as a flow of the function's internal operations; and
    c) detect anomalies within the function flow or within individual events in said function by analyzing said sequences.

11. A method according to any one of claims 1 or 3 to 10, or a serverless cloud environment according to any one of claims 2 to 10, further comprising providing a unique anomaly detection dataset containing data reflecting the activity of two distinct applications, each corresponding to a different serverless paradigm.

**12.** A method according to any one of claims 1, or 2 to 11, further comprising performing dynamic analysis consisting of testing and evaluating an application during runtime.

**13.** A method according to any one of claims 1, or 2 to 12, wherein an application flow is triggered by an action outside of the cloud environment.

**14.** A method according to any one of claims 1, or 2 to 13, wherein a detection pipeline consists of the following steps:

a) data collection for the anomaly detection models using the cloud provider's logging and monitoring tools; and
b) data filtering and preprocessing, where each threat detection model filters and processes the raw log files to produce the appropriate data representation used by the model.

**15.** A method according to any one of claims 1, or 2 to 14, wherein the Data Leakage Detection model is adapted to:

a) generate graph representations of the cloud environment;
b) generate features for each node in the graph;
c) train a deep autoencoder to reconstruct each node's features; and
d) predict the anomaly score of each node based on the autoencoder's reconstruction error.

**16.** A method according to any one of claims 1, or 2 to 15, wherein the Compromised Function Detection model is adapted to:

a) generate graph representations of the cloud environment;
b) detect deviations from the normal activity of serverless functions; and
c) represent the sequence of events occurring during the execution of each function by a sequence of vectors, where each vector represents an event in the sequence.

**17.** A method according to any one of claims 1, or 2 to 16, wherein the compromised function detection model detects deviations from the normal activity of serverless functions flow.

**18.** A method according to claim 16, wherein the events that occur during the execution of each function are represented by a sequence of vectors, where each vector represents an event in the sequence.

**19.** A method according to any one of claims 1, or 2 to 18, wherein the raw logs containing information regarding the activity of the serverless applications are collected and used to train the threat detection model.

$REST\ API\ call$

$AF_5$

| $FF_1$ | $FF_2$ | $FF_3$ | $FF_4$ |
|---|---|---|---|
| ReserveBooking | CollectPayment | ConfirmBooking | NotifyBooking |

$FF_3$

| $E_1$ | $E_2$ | $E_3$ | $E_4$ |
|---|---|---|---|
| Invocation | Lambda Handler | Update Item | Overhead |

$E_3$

<$AF_5$, $FF_3$, $E_3$,12:29:49.95, 12:29:49.96, UpdateItem, DynamoDB, $E_2$, BookingTable >

Fig. 1

| EventName | | PutItem | | 0.533 |
|---|---|---|---|---|
| EventType | | DynamoDB | | 0.25 |
| EventTarget | | Booking Table | Encoding | 0.333 |
| EventParentName | = | #reserve_booking | and | 0.6 |
| EventDuration | | 0.0459 | Normalization | 0.8684 |
| EventRelativeStartTime | | 0.5703 | | 0.3889 |
| EventDepth | | 4 | | 1 |

Fig. 2

Europäisches
Patentamt

European
Patent Office

Office européen
des brevets

# EUROPEAN SEARCH REPORT

Application Number

EP 24 17 0789

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/129540 A1 (SHERIFF AKRAM ISMAIL [US] ET AL) 28 April 2022 (2022-04-28) * paragraph [0001] * * paragraph [0035] - paragraph [0055] * * paragraph [0016] * * paragraph [0060] - paragraph [0065] * * figure 6 * | 1-19 | INV. H04L9/40 ADD. G06F21/55 |
| A | SAFARYAN GOR ET AL: "SLAM: SLO-Aware Memory Optimization for Serverless Applications", 2022 IEEE 15TH INTERNATIONAL CONFERENCE ON CLOUD COMPUTING (CLOUD), IEEE, 10 July 2022 (2022-07-10), pages 30-39, XP034174983, DOI: 10.1109/CLOUD55607.2022.00019 [retrieved on 2022-08-24] * page 3 * | 1-19 | |

TECHNICAL FIELDS SEARCHED (IPC)

H04L
G06F

The present search report has been drawn up for all claims

| Place of search | Date of completion of the search | Examiner |
|---|---|---|
| The Hague | 9 September 2024 | Dely, Peter |

EPO FORM 1503 03.82 (P04C01)

**ANNEX TO THE EUROPEAN SEARCH REPORT
ON EUROPEAN PATENT APPLICATION NO.**

EP 24 17 0789

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | Publication date | Patent family member(s) | Publication date |
|---|---|---|---|
| US 2022129540 A1 | 28-04-2022 | US 2022129540 A1<br>US 2024028704 A1 | 28-04-2022<br>25-01-2024 |

EPO FORM P0459

For more details about this annex : see Official Journal of the European Patent Office, No. 12/82

**REFERENCES CITED IN THE DESCRIPTION**

**Non-patent literature cited in the description**

- *Owasp serverless top 10,* 2021, https://owasp.org/www-project-serverless-top-10
- **ALPERNAS, K. ; FLANAGAN, C. ; FOULADI, S. ; RYZHYK, L. ; SAGIV, M. ; SCHMITZ, T. ; WINSTEIN, K.** Secure serverless computing using dynamic information flow control. *arXiv preprint arXiv:1802.08984,* 2018
- **CHAWLA, R.** Information flow control for serverless systems. *International Journal of Advanced Computer Science and Applications,* 2021, vol. 12 (9
- **DATTA, P. ; KUMAR, P. ; MORRIS, T. ; GRACE, M. ; RAHMATI, A. ; BATES, A.** Valve: Securing function workflows on serverless computing platforms. *Proceedings of The Web Conference 2020.,* 2020, 939-950
- **DATTA, P. ; POLINSKY, I. ; INAM, M.A. ; BATES, A. ; ENCK, W.** ALASTOR}: Reconstructing the provenance of serverless intrusions. *31st USENIX Security Symposium (USENIX Security 22).,* 2022, 2443-2460
- **DU, M. ; LI, F. ; ZHENG, G. ; SRIKUMAR, V.** Deeplog: Anomaly detection and diagnosis from system logs through deep learning. *Proceedings of the 2017 ACM SIGSAC Conference on Computer and Communications Security.,* 2017, 1285-1298
- Tracing privilege misuse through behavioral anomaly detection in geometric spaces. **DUESSEL, P. ; LUO, S. ; FLEGEL, U. ; DIETRICH, S. ; MEIER, M.** 2020 13th International Conference on Systematic Approaches to Digital Forensic Engineering (SADFE). IEEE, 2020, 22-31
- **EDDY, N.** Cloud misconfig exposes 3tb of sensitive airport data in amazon s3 bucket. *lives at stake,* July 2022, https://www.darkreading.com/application-security/ cloud-misconfig-exposes-3tb-sensitive-airport-data-amazon-s3-bucket
- **GILL, P. ; DIETL, W. ; TRIPUNITARA, M.V.** Least-privilege calls to amazon web services. *IEEE Transactions on Dependable and Secure Computing,* 2022
- Logbert: Log anomaly detection via bert. **GUO, H. ; YUAN, S. ; WU, X.** 2021 International Joint Conference on Neural Networks (IJCNN). IEEE, 2021, 1-8
- **HABLER, E. ; SHABTAI, A.** Using lstm encoder-decoder algorithm for detecting anomalous ads-b messages. *Computers & Security,* 2018, vol. 78, 155-173

- **HASSAN, H.B. ; BARAKAT, S.A. ; SARHAN, Q.I.** Survey on serverless computing. *Journal of Cloud Computing,* 2021, vol. 10 (1), 1-29
- **HWANG, R.H. ; PENG, M.C. ; HUANG, C.W. ; LIN, P.C ; NGUYEN, V.L.** An unsupervised deep learning model for early network traffic anomaly detection. *IEEE Access,* 2020, vol. 8, 30387-30399
- **IBRAHIM, A.S. ; HAMLYN-HARRIS, J. ; GRUNDY, J.** Emerging security challenges of cloud virtual infrastructure. *arXiv,* 2016, https://doi.org/10.48550/ARXIV.1612.09059, https://arxiv.org/abs/1612.09059
- **JEGAN, D.S. ; WANG, L. ; BHAGAT, S. ; RISTENPART, T. ; SWIFT, M.** Guarding serverless applications with seclambda. *arXiv preprint arXiv:2011.05322,* 2020
- **JEGAN, D.S. ; WANG, L. ; BHAGAT, S. ; SWIFT, M.** *Guarding serverless applications with kalium*
- **KELLY, D. ; GLAVIN, F.G. ; BARRETT, E.** Denial of wallet-defining a looming threat to serverless computing. *Journal of Information Security and Applications,* 2021, vol. 60, 102843
- **LI, X. ; LENG, X. ; CHEN, Y.** Securing serverless computing: Challenges, solutions, and opportunities. *IEEE Network,* 2022
- **LIU, F. ; WEN, Y. ; ZHANG, D. ; JIANG, X. ; XING, X ; MENG, D.** Log2vec: A heterogeneous graph embedding based approach for detecting cyber threats within enterprise. *Proceedings of the 2019 ACM SIGSAC Conference on Computer and Communications Security.,* 2019, 1777-1794
- **LIU, Z ; QIN, T. ; GUAN, X. ; JIANG, H. ; WANG, C.** An integrated method for anomaly detection from massive system logs. *IEEE Access,* 2018, vol. 6, 30602-30611
- **LYNN, T. ; ROSATI, P. ; LEJEUNE, A. ; EMEAKAROHA, V.** A preliminary review of enterprise serverless cloud computing (function-as-a-service) platforms. *2017 IEEE International Conference on Cloud Computing Technology and Science (CloudCom).,* 2017, 162-169, https://doi.org/10.1109/CloudCom.2017.15
- **MARIN, E. ; PERINO, D. ; DI PIETRO, R.** Serverless computing: a security perspective. *Journal of Cloud Computing,* 2022, vol. 11 (1), 1-12

- **NUPPONEN, J. ; TAIBI, D.** Serverless: What it is, what to do and what not to do. *2020 IEEE International Conference on Software Architecture Companion (ICSAC).,* 2020, 49-50, https://doi.org/10.1109/IC-SA-C50368.2020.00016
- **OBETZ, M. ; PATTERSON, S. ; MILANOVA, A.** Static call graph construction in {AWS} lambda serverless applications. *11th USENIX Workshop on Hot Topics in Cloud Computing (HotCloud 19),* 2019
- **PANG, G. ; SHEN, C ; CAO, L. ; HENGEL, A.V.D.** Deep learning for anomaly detection: A review. *ACM Computing Surveys (CSUR),* 2021, vol. 54 (2), 1-38
- **PUSULURI, V.S.R.** *Taxonomy of security and privacy issues in serverless computing,* 2022
- **SANKARAN, A. ; DATTA, P. ; BATES, A.** Workflow integration alleviates identity and access management in serverless computing. *Annual Computer Security Applications Conference.,* 2020, 496-509
- **SEALS, A. ; SEALS, T.** *Microsoft leaves 250m customer service records open to the web,* January 2020, https://threatpost.com/microsoft-250m-customer-service-records-open/152086
- **SHARMA, B. ; POKHAREL, P. ; JOSHI, B.** User behavior analytics for anomaly detection using lstm autoencoder-insider threat detection. *Proceedings of the 11th International Conference on Advances in Information Technology.,* 2020, 1-9
- *Skyscanner: Lambdaguard,* 2020, https://github.com/Skyscanner/ LambdaGuard
- **TUOR, A.R. ; BAERWOLF, R. ; KNOWLES, N. ; HUTCHINSON, B. ; NICHOLS, N. ; JASPER, R.** Recurrent neural network language models for open vocabulary event-level cyber anomaly detection. *Workshops at the thirty-second AAAI conference on artificial intelligence,* 2018
- **ZHANG, X. ; XU, Y. ; LIN et al.** Robust log-based anomaly detection on unstable log data. *Proceedings of the 2019 27th ACM Joint Meeting on European Software Engineering Conference and Symposium on the Foundations of Software Engineering.,* 2019, 807-817
- **ZHAO, Z. ; XU, C. ; LI, B.** A lstm-based anomaly detection model for log analysis. *Journal of Signal Processing Systems,* 2021, vol. 93 (7), 745-751
- **ZHOU, C. ; PAFFENROTH, R.C.** Anomaly detection with robust deep autoencoders. *Proceedings of the 23rd ACM SIGKDD international conference on knowledge discovery and data mining.,* 2017, 665-674
- **ZISSIS, D. ; LEKKAS, D.** Addressing cloud computing security issues. *Future Generation computer systems,* 2012, vol. 28 (3), 583-592